# FASCICULE DE BREVET EUROPEEN

(11) **EP 0 693 593 B1**
(45) Date de publication et mention de la délivrance du brevet: **22.12.1999**
(21) Numéro de dépôt: 95401655.6
(22) Date de dépôt: 07.07.1995
(51) Int. Cl.: E02B 17/08, B23K 33/00, B23K 15/00

(54) **Procédé d'assemblage de tronçons de grande longueur de membrures des jambes de support d'une plate-forme pétrolière**
Verfahren zur Montage von Blechprofilträgerteilen, grosser Länge, für die Beingurte einer Ölplatform
Method for assembling very long parts of sheet metal girders for the legs of an oilplatform

(30) Priorité: 19.07.1994 FR 9408922
(43) Date de publication de la demande: 24.01.1996
(73) Titulaire: Technip France, 92973 Paris la Défense Cedex (FR)
(72) Inventeur: Thomas, Pierre Armand, F-92800 Puteaux (FR); Naudin, Jean-Claude, F-75013 Paris (FR)
(74) Mandataire: Lanceplaine, Jean-Claude

(56) Documents cités:
- EP-A- 0 520 854
- DE-A- 2 135 667
- FR-A- 1 225 617
- FR-A- 2 560 247
- US-A- 3 967 457
- US-A- 4 000 952

## Description

La présente invention a pour objet un procédé d'assemblage de tronçons de grande longueur de membrures des jambes de support d'une plate-forme pétrolière de forage ou d'exploitation en mer (voir p. ex. le US-A-3,967,457).

Les plates-formes pétrolières et notamment les plates-formes auto-élévatrices comportent des jambes prenant appui sur le fond marin et une coque montée déplaçable et réglable en hauteur le long des jambes.

L'ensemble de la plate-forme est amené en flottaison jusqu'au site de forage ou d'exploitation et les jambes sont descendues jusqu'au contact du fond marin, puis en prenant appui sur les jambes, la coque est hissée au-dessus du niveau de la mer, jusqu'à une altitude qui la met hors de portée des plus hautes vagues.

Chaque jambe est constituée par des membrures verticales, par exemple au nombre de trois, reliées entre elles par un treillis de poutrelles métalliques.

Chaque membrure est constituée par des tronçons soudés bout à bout et formés chacun, d'une part, par une plaque rectangulaire et, d'autre part, par des raidisseurs en forme de demi-coquille soudés chacun sur l'une des faces principales de ladite plaque.

Généralement, chaque tronçon a une longueur comprise entre 12 et 20 mètres.

Les plaques rectangulaires comportent sur leurs faces latérales des dents qui forment, sur une partie de la longueur des membrures, des crémaillères diamétralement opposées, destinées à coopérer avec des pignons de sortie de mécanismes d'entraînement montés sur la coque de la plate-forme.

Chaque raidisseur soudé sur l'une des faces principales des plaques rectangulaires possèdent une longueur inférieure à la longueur d'une plaque de façon à ménager, à chaque extrémité de la plaque, un espace libre permettant de souder les tronçons bout à bout au moment de l'assemblage de la membrure.

Pour assurer la continuité des raidisseurs, une pièce de liaison en forme de demi-coquille et de profil correspondant au profil des raidisseurs, est positionnée au niveau de chaque espace libre et dans le prolongement desdits raidisseurs, après le soudage bout à bout des tronçons de la membrure.

Cette disposition permet de rabouter et de souder directement sur le chantier des tronçons de la membrure qui ont été préalablement préfabriqués dans l'atelier.

Ces membrures, qui supportent la coque de la plate-forme, sont fortement sollicitées en fatigue et les cordons de soudure notamment des raidisseurs sur les plaques rectangulaires sont également fortement sollicitées.

Jusqu'à présent, les raidisseurs sont soudés sur les faces principales des plaques rectangulaires par des procédés de soudage classique comme par exemple des procédés de soudage automatique sous flux.

Or, avec ces techniques de soudage, les cordons de soudure risquent de présenter des défauts de raccordement plus particulièrement au niveau de la racine desdits cordons de soudure, c'est à dire à l'intérieur des raidisseurs dans les zones de raccordement avec les plaques rectangulaires.

Ces défauts sont des risques de corrosion sous contrainte et forment des zones de concentration des contraintes qui sont incompatibles avec les fortes sollicitations en fatigue que subissent les jambes des plates-formes pétrolières.

L'invention a pour but d'éviter ces inconvénients en proposant un procédé d'assemblage permettant d'améliorer le comportement des membrures en service et la qualité des soudures et de maîtriser les déformations, tout en réduisant les coûts de fabrication.

L'invention a pour objet un procédé d'assemblage de tronçons de grande longueur de membrures des jambes de support d'une plate-forme pétrolière, chaque tronçon comprenant, d'une part, une plaque rectangulaire munie sur chacune de ses faces latérales de dents formant une crémaillère et, d'autre part, au moins un raidisseur en forme de demi-coquille fixée sur chaque face principale de ladite plaque rectangulaire, caractérisé en ce qu'il consiste :
- à usiner, sur toute la longueur de chaque face principale de la plaque rectangulaire et de part et d'autre de l'axe longitudinal de ladite plaque rectangulaire, un méplat incliné en direction de cet axe longitudinal, chaque méplat étant séparé dudit axe longitudinal d'une distance correspondant sensiblement au rayon du raidisseur,
- à usiner une rainure sur toute la longueur de la plaque rectangulaire et avant chaque méplat par rapport à l'axe longitudinal de ladite plaque rectangulaire,
- à usiner, sur les bords longitudinaux de chaque raidisseur, un chanfrein incliné en direction de l'axe dudit raidisseur et dont l'angle est sensiblement égal à l'angle d'inclinaison du méplat correspondant,
- à placer, sur chaque face principale de la plaque rectangulaire, le raidisseur pour que le chanfrein des bords longitudinaux dudit raidisseur soit en appui sur un méplat de ladite plaque rectangulaire,
- à souder sous vide de l'extérieur au moyen d'un faisceau d'électrons chaque raidisseur sur la plaque rectangulaire au niveau des chanfreins et des méplats pour former un tronçon de membrures,
- et à réaliser un traitement thermique du tronçon de membrures.

Selon d'autres caractéristiques de l'invention :
- chaque raidisseur est formé de plusieurs éléments raboutés et soudés entre eux,
- l'angle d'inclinaison des méplats et des chanfreins est compris entre 5 et 30° et de préférence entre 10 et 15°,
- le traitement thermique comprend une trempe suivi du revenu du tronçon,
- avant le traitement thermique, le tronçon est chauffé à une température de l'ordre de 1000°C pour la trempe,
- le revenu du tronçon est réalisé à une température de l'ordre de 600°C,
- le traitement thermique comprend un revenu du tronçon,
- le revenu du tronçon est réalisé à une température de l'ordre de 625°C.
- avant de réaliser le traitement thermique du tronçon, on effectue par l'intérieur de chaque raidisseur une refusion de la racine des cordons de soudure,
- la refusion de la racine des cordons de soudure est réalisée par un procédé de soudage à l'arc sous protection gazeuse avec électrode réfractaire.

L'invention sera mieux comprise à l'aide de la description qui va suivre, donnée uniquement à titre d'exemple et faite en se référant aux dessins annexés, sur lesquels :
- la Fig. 1 est une vue schématique en élévation d'une plate-forme pétrolière par exemple auto-élévatrice,
- la Fig. 2 est une vue schématique en perspective d'un tronçon de membrures d'une jambe de support réalisé par le procédé selon l'invention,
- la Fig. 3 est une vue en coupe schématique d'une plaque rectangulaire et de deux raidisseurs avant l'assemblage de ces éléments,
- la Fig. 4 est une vue schématique en coupe et à plus grande échelle montrant une zone de raccordement entre une plaque rectangulaire et un raidisseur,
- la Fig. 5 est une vue schématique en coupe d'un cordon de soudure d'une plaque rectangulaire et d'un raidisseur selon un premier mode de réalisation,
- la Fig. 6 est une vue schématique en coupe d'une zone de raccordement entre une plaque rectangulaire et un raidisseur selon un second mode de réalisation.

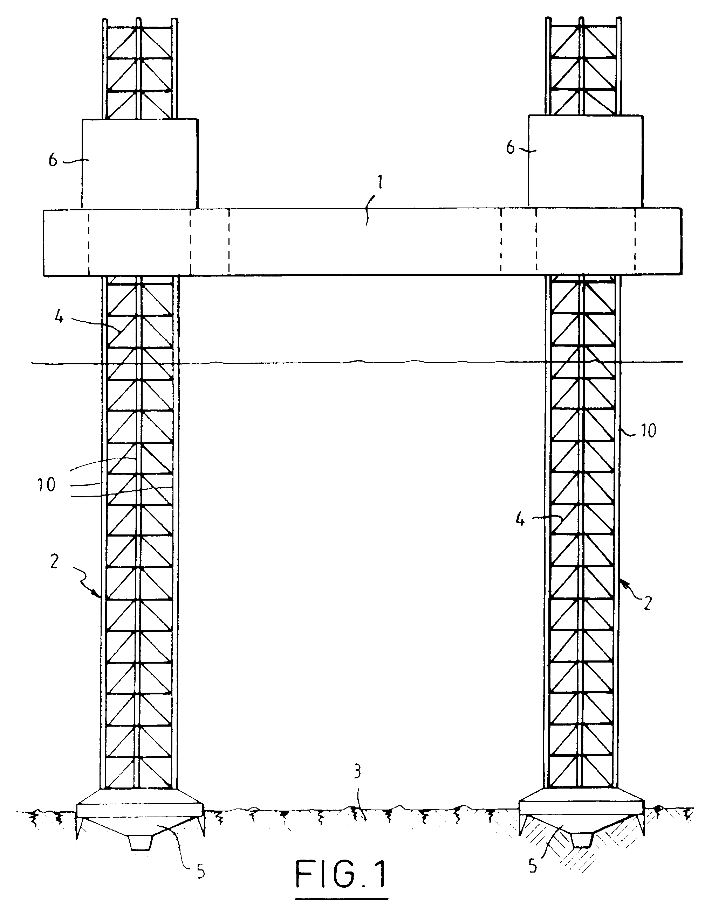

Sur la Fig. 1, on a représenté schématiquement une plate-forme pétrolière auto-élévatrice comprenant une coque 1 montée déplaçable sur des jambes verticales 2 destinées à prendre appui sur le fond marin 3, lorsque la plate-forme est en position de forage ou d'exploitation.

Chacune des jambes verticales 2 présente, dans le cas présent, une section triangulaire et est constituée de trois membrures 10, reliées entre elles par un treillis de poutrelles métalliques 4.

Chaque jambe 2 se termine à sa partie inférieure par un pied 5.

La plate-forme est par ailleurs équipée, au niveau de chaque jambe 2, d'un mécanisme d'entraînement et de suspension 6 de la coque par rapport auxdites jambes 2.

Des mécanismes d'entraînement permettent de descendre les jambes 2 jusqu'au contact du fond marin, puis en prenant appui sur les jambes, de hisser la coque 1 au-dessus de la mer jusqu'à une altitude qui la met hors de portée des plus hautes vagues.

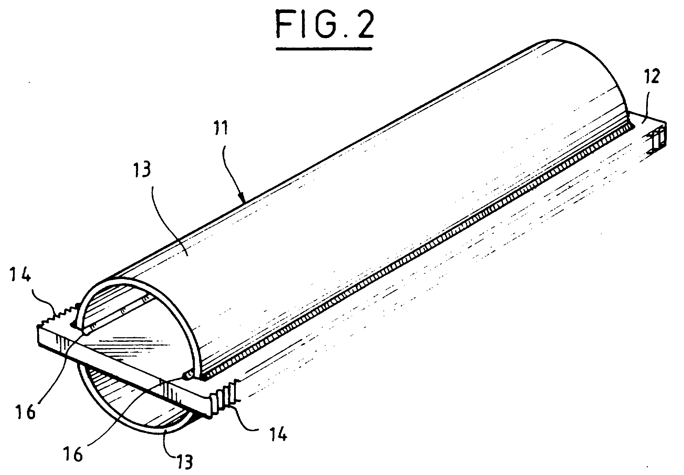

Comme représenté à la Fig. 2 chaque membrure 10 des jambes 2 se composent de plusieurs tronçons 11 de grande longueur, de l'ordre de 12 à 20 mètres.

Chaque tronçon 11 est formé d'une plaque rectangulaire 12 et de deux raidisseurs 13 en forme de demi-coquille, soudés chacun sur une face principale de ladite plaque rectangulaire 12.

Les faces latérales de la plaques rectangulaires 12 comportent des dents 14 pour former sur la membrure 10, deux crémaillères diamétralement opposées, destinées à coopérer avec des pignons de sortie, non représentés, des mécanismes d'entraînement 6.

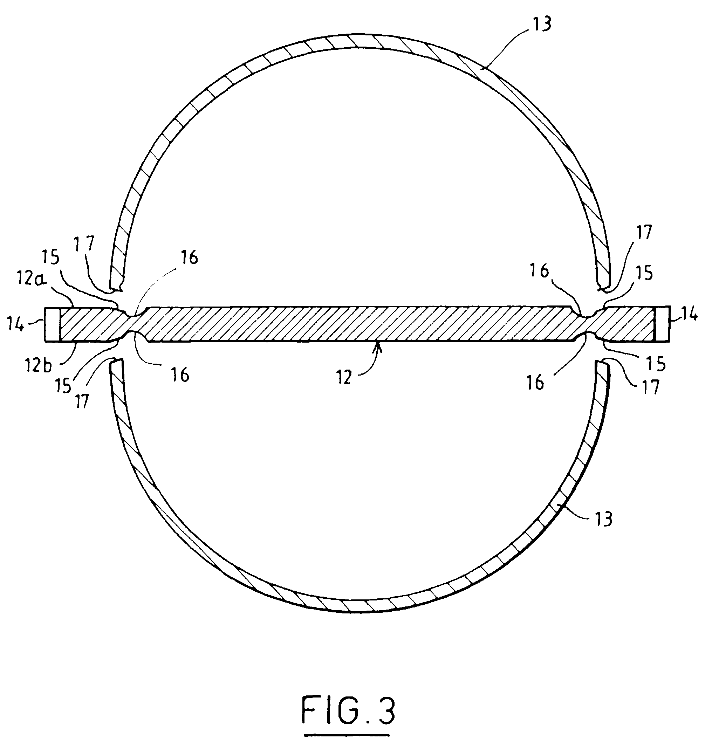

En se reportant maintenant aux Figs. 3 à 6, on va décrire l'assemblage d'un tronçon 11 de membrures 10 par le procédé selon l'invention.

Comme représenté à la Fig. 3, on usine tout d'abord, sur toute la longueur de chaque face principale 12a et 12b de la plaque rectangulaire 12 et de part et d'autre de l'axe longitudinal de ladite plaque rectangulaire, un méplat 15 incliné en direction de cet axe longitudinal.

Ainsi, la plaque rectangulaire 12 comporte, sur chacune de ses faces principales 12a et 12b, deux méplats 15 diamétralement opposés et s'étendant sur toute la longueur de ladite plaque rectangulaire 12.

Chaque méplat 15 est séparé de l'axe longitudinal de la plaque rectangulaire 12 d'une distance correspondant sensiblement au rayon du raidisseur 13.

Ensuite, on usine une rainure 16 sur toute la longueur de la plaque rectangulaire et avant chaque méplat 15 par rapport à l'axe longitudinal de ladite plaque rectangulaire 12.

Sur les bords longitudinaux de chaque raidisseur 13, un chanfrein 17 est usiné. Chaque chanfrein 17 est incliné en direction de l'axe du raidisseur 13 d'un angle sensiblement égal à l'angle d'inclinaison des méplats 15 usinés sur chaque face principale 12a et 12b de la plaque rectangulaire 12.

L'angle d'inclinaison des méplats 15 et des chanfreins 17 est compris entre 5 et 30° et de préférence entre 10 et 15°.

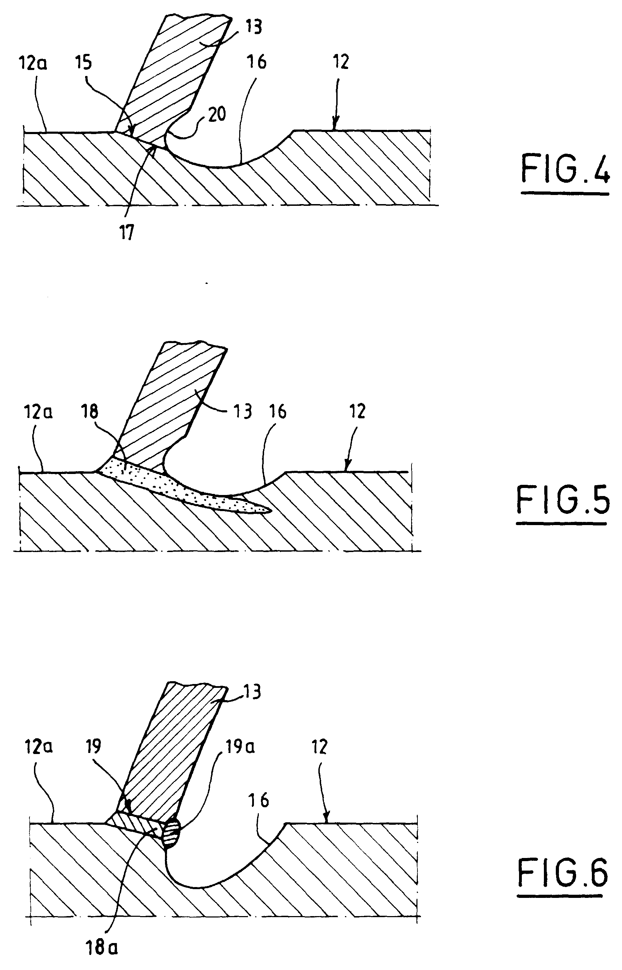

Ainsi que représenté sur les Figs. 4 et 5, la face interne du raidisseur 13 comporte, juste au-dessus de chaque méplat 15, une gorge 20 s'étendant sur toute la longueur dudit raidisseur 13.

Pour réaliser l'assemblage des raidisseurs 13 avec la plaque rectangulaire 12, on place chaque raidisseur 13 sur chaque face principale correspondante 12a et 12b de la plaque rectangulaire 12 de telle sorte que le chanfrein 17 des bords longitudinaux de chaque raidisseur 13 soit en appui sur un méplat 15 de ladite plaque rectangulaire 12 comme représenté à la Fig. 4.

Après cette opération, on place l'ensemble formé par les raidisseurs 13 et la plaque rectangulaire 12, dans une enceinte à vide, non représentée, et on soude de l'extérieur au moyen d'un faisceau d'électrons chaque raidisseur 13 sur la plaque rectangulaire 12 au niveau des méplats 15 et des chanfreins 17 de façon à réaliser, au niveau de chaque zone de raccordement entre les raidisseurs 13 et la plaque rectangulaire 12, un cordon de soudure 18 tel que représenté à la Fig. 5.

L'inclinaison des méplats 15 et des chanfreins 17 permet de pouvoir incliner le faisceau d'électrons ce qui facilite la soudure.

Comme cela est visible à la Fig. 5, le cordon de soudure 18 pénètre dans la plaque rectangulaire 12 ce qui assure une transition progressive de la forme et des efforts entre la plaque rectangulaire 12 et les raidisseurs 13.

La dernière opération consiste à réaliser un traitement thermique du tronçon 11 de membrures.

Selon un premier mode de réalisation, le traitement thermique comprend une trempe suivi d'un revenu du tronçon 11.

A cet effet, le tronçon 11 est chauffé à une température de l'ordre de 1000°C et trempé dans une cuve par exemple remplie d'eau.

Après cette opération de trempe, le revenu du tronçon 11 est réalisé à une température de l'ordre de 600°C.

Selon un second mode de réalisation, le traitement thermique comprend un revenu du tronçon 11. Ce revenu est réalisé à une température de l'ordre de 625°C.

Ce traitement thermique permet d'obtenir une continuité entre le métal constituant les raidisseurs 13 et le métal constituant la plaque rectangulaire 12.

Ainsi, la zone soudée possède des caractéristiques mécaniques sensiblement identiques au métal constituant les raidisseurs 13 et la plaque rectangulaire 12.

Selon une variante, chaque raidisseur 13 peut être formé de plusieurs éléments raboutés et soudés entre eux.

Les tronçons 11 ainsi formés sont ensuite soudés bout à bout par des moyens classiques pour réaliser une membrure 10.

Selon une variante représenté à la Fig. 6, les rainures 16 ont une profondeur plus importante que dans le précédent mode de réalisation et dans ce cas, on effectue, par l'intérieur de chaque raidisseur 13, une refusion de la racine 18a des cordons de soudure 18 au moyen par exemple d'un procédé de soudage à l'arc sous protection gazeuse avec électrode réfractaire.

Pour cela, on utilise un outillage approprié qui se déplace à l'intérieur de chaque raidisseur 13 et le long de chaque cordon de soudure 18 sur la plaque rectangulaire 12.

Ainsi, on obtient un cordon de soudure 19 comportant une refusion 19a de la racine 18a, comme représenté à la Fig. 6.

Les rainures 16 permettent la formation de la refusion 19a et une transition progressive de la forme et des efforts entre la plaque rectangulaire 12 et les raidisseurs 13.

La dernière opération consiste à réaliser un traitement thermique par trempé, par exemple à l'eau, suivi d'un revenu du tronçon 11 de membrures.

Le procédé d'assemblage selon l'invention permet d'améliorer le comportement des membrures en service et notamment la tenue à la fatigue, la tenue à la corrosion et la tenue à la corrosion-fatigue.

Ce procédé permet également d'améliorer la qualité des soudures et de supprimer les zones de concentration des contraintes qui sont incompatibles avec les fortes sollicitations en fatigue que subissent les jambes des plates-formes pétrolières, tout en réduisant les coûts de fabrication de ces jambes par l'automatisation du procédé d'assemblage.

## Revendications

1. Procédé d'assemblage de tronçons (11) de grande longueur de membrures (10) des jambes (2) de support d'une plate-forme pétrolière, chaque tronçon (11) comprenant, d'une part, une plaque rectangulaire (12) munie sur chacune de ses faces latérales de dents (14) formant une crémaillère et, d'autre part, au moins un raidisseur (13) en forme de demi-coquille fixé sur chaque face principale (12a, 12b) de ladite plaque rectangulaire (12), caractérisé en ce qu'il consiste :
- à usiner, sur toute la longueur de chaque face principale (12a, 12b) de la plaque rectangulaire (12) et de part et d'autre de l'axe longitudinal de ladite plaque rectangulaire (12), un méplat (15) incliné en direction de cet axe longitudinal, chaque méplat (15) étant séparé dudit axe longitudinal d'une distance correspondant sensiblement au rayon du raidisseur (13),
- à usiner une rainure (16) sur toute la longueur de la plaque rectangulaire (12) et avant chaque méplat (15) par rapport à l'axe longitudinal de ladite plaque rectangulaire (12),
- à usiner, sur les bords longitudinaux de chaque raidisseur (13), un chanfrein (17) incliné en direction de l'axe dudit raidisseur (13) et dont l'angle est sensiblement égal à l'angle d'inclinaison du méplat (15) correspondant,
- à placer, sur chaque face principale (12a, 12b) de la plaque rectangulaire (12), le raidisseur (13) pour que le chanfrein (17) des bords longitudinaux dudit raidisseur (13) soit en appui sur un méplat (15) de ladite plaque rectangulaire (12),
- à souder sous vide de l'extérieur au moyen d'un faisceau d'électrons chaque raidisseur (13) sur la plaque rectangulaire (12) au niveau des chanfreins (17) et des méplats (15) pour former un tronçon (11) de membrures (10),
- et à réaliser un traitement thermique du tronçon (11).

2. Procédé selon la revendication 1, caractérisé en ce que chaque raidisseur (13) est formé de plusieurs éléments raboutés et soudés entre eux.

3. Procédé selon la revendication 1, caractérisé en ce que l'angle d'inclinaison des méplats (15) et des chanfreins (17) est compris entre 5 et 30° et de préférence entre 10 et 15°.

4. Procédé selon la revendication 1, caractérisé en ce que le traitement thermique comprend une trempe suivi d'un revenu du tronçon (11).

5. Procédé selon la revendication 4, caractérisé en ce que, avant le traitement thermique, le tronçon (11) est chauffé à une température de 1000°C pour la trempe.

6. Procédé selon la revendication 4, caractérisé en ce que le revenu du tronçon (11) est réalisé à une température de l'ordre de 600°C.

7. Procédé selon la revendication 1, caractérisé en ce que le traitement thermique comprend un revenu du tronçon (11).

8. Procédé selon la revendication 7, caractérisé en ce que le revenu du tronçon (11) est réalisé à une température de l'ordre de 625°C.

9. Procédé selon la revendication 1, caractérisé en ce que, avant de réaliser le traitement thermique du tronçon (11), on effectue par l'intérieur de chaque raidisseur (13) une refusion de la racine (18a) des cordons de soudure (18).

10. Procédé selon la revendication 9, caractérisé en ce que la refusion de la racine (18a) des cordons de soudure (18) est réalisée par un procédé de soudage à l'arc sous protection gazeuse avec électrode réfractaire.

## Patentansprüche

1. Verfahren zur Montage von Teilstücken (11) großer Länge von Gurten (10) der Beine (2) einer Ölplattform, wobei jedes Teilstück (11) einerseits eine rechteckige Platte (12) aufweist, die auf jeder ihrer Seitenflächen mit eine Zahnstange bildenden Zähnen (14) versehen ist, und andererseits mindestens eine Versteifung (13) in Form einer Schalenhälfte, die an jeder Hauptfläche (12a, 12b) der rechteckigen Platte (12) befestigt ist, dadurch gekennzeichnet, daß
- auf der ganzen Länge jeder Hauptfläche (12a, 12b) der rechteckigen Platte (12) und zu beiden Seiten der Längsachse dieser rechteckigen Platte (12) eine in Richtung auf diese Längsachse geneigte Facette (15) ausgearbeitet wird, wobei jede Facette (15) in einem Abstand von dieser Längsachse angeordnet ist, der im wesentlichen dem Radius der Versteifung (13) entspricht,
- auf der ganzen Länge der rechteckigen Platte (12) und bezüglich der Längsachse der rechteckigen Platte (12) vor jeder Facette (15) eine Nut (16) ausgearbeitet wird,
- an den Längsrändern jeder Versteifung (13) eine Abschrägung (17) hergestellt wird, die in Richtung auf die Achse der Versteifung (13) geneigt ist und deren Winkel im wesentlichen gleich dem Neigungswinkel der entsprechenden Facette (15) ist,
- die Versteifung (13) auf jeder Hauptfläche (12a, 12b) der rechteckigen Platte (12) so angeordnet wird, daß die Abschrägung (17) der Längsränder der Versteifung (13) auf einer Facette (15) der rechteckigen Platte (12) aufliegt,
- jede Versteifung (13) an der rechteckigen Platte (12) auf Höhe der Abschrägungen (17) und der Facetten (15) unter Vakuum von außen mit Hilfe eines Elektronenstrahls angeschweißt wird, um ein Teilstück (11) von Gurten (10) zu bilden, und
- eine thermische Behandlung des Teilstücks (11) vorgenommen wird.

2. Verfahren nach Anspruch 1, dadurch gekennzeichnet, daß jede Versteifung (13) aus mehreren stumpf aneinandergesetzten und miteinander verschweißten Elementen gebildet wird.

3. Verfahren nach Anspruch 1, dadurch gekennzeichnet, daß der Neigungswinkel der Facetten (15) und der Abschrägungen (17) 5 bis 30° und vorzugsweise 10 bis 15° beträgt.

4. Verfahren nach Anspruch 1, dadurch gekennzeichnet, daß die thermische Behandlung eine Abschreckung mit einem darauffolgenden Anlassen des Teilstücks (11) umfaßt.

5. Verfahren nach Anspruch 4, dadurch gekennzeichnet, daß das Teilstück (13) vor der thermischen Behandlung für die Abschreckung auf eine Temperatur von 1000°C erhitzt wird.

6. Verfahren nach Anspruch 4, dadurch gekennzeichnet, daß das Anlassen des Teilstücks (11) bei einer Temperatur von etwa 600°C vorgenommen wird.

7. Verfahren nach Anspruch 1, dadurch gekennzeichnet, daß die thermische Behandlung ein Anlassen des Teilstücks (11) umfaßt.

8. Verfahren nach Anspruch 7, dadurch gekennzeichnet, daß das Anlassen des Teilstücks (11) bei einer Temperatur von etwa 625°C vorgenommen wird.

9. Verfahren nach Anspruch 1, dadurch gekennzeichnet, daß man vor der Durchführung der thermischen Behandlung des Teilstücks (11) vom Inneren jeder Versteifung (13) aus eine Umschmelzung der Wurzel (18a) der Schweißraupen (18) vornimmt.

10. Verfahren nach Anspruch 9, dadurch gekennzeichnet, daß die Umschmelzung der Wurzel (18a) der Schweißraupen (18) in einem Lichtbogenschweißverfahren unter Gasschutz mit nicht abschmelzender Elektrode vorgenommen wird.

## Claims

1. Method of assembling very long segments (11) of struts (10) of the support legs (2) of an oil platform, each segment (11) comprising, on the one hand, a rectangular plate (12) equipped on each of its lateral faces with teeth (14) forming a rack gear and, on the other hand, at least one stiffener (13) in half-shell form fixed to each main face (12a, 12b) of the said rectangular plate (12), characterised in that it consists:
- in machining, over the entire length of each main face (12a, 12b) of the rectangular plate (12) and on either side of the longitudinal axis of the said rectangular plate (12), a flat (15) inclined towards this longitudinal axis, each flat (15) being separated from the said longitudinal axis by a distance corresponding substantially to the radius of the stiffener (13),
- in machining a groove (16) along the entire length of the rectangular plate (12) and in front of each flat (15) with respect to the longitudinal axis of the said rectangular plate (12),
- in machining, on the longitudinal edges of each stiffener (13), a chamfer (17) inclined towards the axis of the said stiffener (13) and the angle of which is substantially equal to the angle of inclination of the corresponding flat (15),
- in placing the stiffener (13) on each main face (12a, 12b) of the rectangular plate (12) so that the chamfer (17) of the longitudinal edges of the said stiffener (13) bears on a flat (15) of the said rectangular plate (12),
- in vacuum-welding each stiffener (13), from the outside by means of an electron bean, onto the rectangular plate (12) of the level of the chamfers (17) and of the flats (15) in order to form a segment (11) of struts (10),
- and in carrying out a heat treatment of the segment (11).

2. Method according to Claim 1, characterised in that each stiffener (13) is formed by several elements welded together end to end.

3. Method according to Claim 1, characterised in that the angle of inclination of the flats (15) and of the chamfers (17) lies between 5 and 30° and preferably between 10 and 15°.

4. Method according to claim 1, characterised in that the heat treatment comprises hardening of the segment (11) followed by annealing.

5. Method according to Claim 4, characterised in that, before the heat treatment, the segment (11) is heated to a temperature of 1000°C for hardening.

6. Method according to Claim 4, characterised in that the annealing of the segment (11) is carried out at a temperature of the order of 600°C.

7. Method according to claim 1, characterised in that the heat treatment comprises annealing of the segment (11).

8. Method according to Claim 7, characterised in that the annealing of the segment (11) is carried out at a temperature of the order of 625°C.

9. Method according to Claim 1, characterised in that, before carrying out the heat treatment of the segment (11), re-melting of the root (18a) of the weld beads (18) is carried out through the inside of each stiffener (13).

10. Method according to Claim 9, characterised in that the re-melting of the root (18a) of the weld beads (18) is carried out by a method of arc welding under gas protection with a refractory electrode.
